# EUROPEAN PATENT SPECIFICATION

(11) **EP 1 403 151 B1**
(45) Date of publication and mention of the grant of the patent: **11.01.2006**
(21) Application number: 03021168.4
(22) Date of filing: 23.09.2003
(51) Int. Cl.: B60R 22/26, B60N 2/36, B60N 2/30, B60R 5/04, B60R 7/02

(54) **Seat belt system for a vehicle and a vehicle equipped therewith**
Sitzgurtsystem für ein Fahrzeug und Fahrzeug ausgerüstet mit diesem System
Système de ceinture de siège pour un véhicule et véhicule équipé avec ce système

(30) Priority: 25.09.2002 JP 2002279244; 25.09.2002 JP 2002279254
(43) Date of publication of application: 31.03.2004
(73) Proprietor: Mazda Motor Corporation, Aki-gun, Hiroshima 730-8670 (JP)
(72) Inventor: Morino, Toshimine c/o Mazda Motor Corporation, Aki-gun Hiroshima 730-8670 (JP); Satani, Kenji c/o Mazda Motor Corporation, Aki-gun Hiroshima 730-8670 (JP); Takahashi, Tatsuya c/o Mazda Motor Corporation, Aki-gun Hiroshima 730-8670 (JP); Matsuhashi, Kazuhiro c/o Mazda Motor Corporation, Aki-gun Hiroshima 730-8670 (JP); Okiyama, Hiroshi c/o Mazda Motor Corporation, Aki-gun Hiroshima 730-8670 (JP)
(74) Representative: Müller-Boré & Partner Patentanwälte

(56) References cited:
- DE-A- 19 802 077
- US-B1- 6 224 132
- PATENT ABSTRACTS OF JAPAN vol. 2000, no. 13, 5 February 2001 (2001-02-05) -& JP 2000 301973 A (NHK SPRING CO LTD), 31 October 2000 (2000-10-31)
- PATENT ABSTRACTS OF JAPAN vol. 1999, no. 10, 31 August 1999 (1999-08-31) -& JP 11 124006 A (IKEDA BUSSAN CO LTD), 11 May 1999 (1999-05-11)

## Description

The present invention relates to a seat belt system and to a vehicle equipped the seat belt system.

Conventionally, as disclosed in Japanese Unexamined Utility Model Publication No. S61-153635 and Japanese Unexamined Patent Publication No. 2001-239870, luggage compartment structures of a vehicle such as an automobile have been proposed. The structure includes a plural rows of seats disposed in a vehicular longitudinal direction, and a luggage compartment formed in a rear portion of the vehicle so as to substantially integrate with a passenger compartment.

The patent literatures also disclose a luggage compartment that can be expanded as needed. The expansion is achieved by selectively arranging the rearmost row of seats in above construction into an upright position or a folded position. With the upright position, its seat back is in an upright state on the rear edge of its seat cushion. With the folded position, its seat back is forwardly folded down onto its seat cushion. Additionally, Japanese Unexamined Patent Publication No. 2001-127820 discloses a constitution having the above base structure and including a luggage box in a box-shape provided on a floor in a rear portion of the luggage compartment and behind the rearmost seat so that a back surface of the seat back is aligned with an upper surface of the luggage box with the rearmost seat in the folded state. In the vehicle equipped with the above luggage compartment, a recess is generally formed receding downwardly for storing a spare tire or other parts in a floor surface of the luggage compartment immediately behind the rearmost row of seats.

Generally, in a seat belt system provided for restraining an occupant in the seat of the vehicle, a buckle, which can releasably engage with a tongue of the seat belt, is attached to the seat cushion via a connecting member comprising a seat belt webbing. However, as described above, in the case of the seat with the seat back selectively arranged into the folded position or the upright position to expand the luggage compartment as needed, the seat cushion should be reduced in thickness as much as possible. The reduced thickness results in reduced rigidity of the seat cushion. As a result, if the buckle is attached to the seat cushion, the occupant restraint performance may be insufficient during an automotive collision or other accidents.

To cope with the problem with the above case, the connecting member of the buckle is fixed to the vehicular body side (particularly, on the vehicular floor), so that the seat belt tension is transmitted directly to the vehicular body, without being transmitted through the seat. However, in the case of the recess that is formed receding downwardly for storing a spare tire or other parts in a floor surface immediately behind the seat, the connecting member of the buckle is impossible to fix on the floor surface. The drawback may arise in other seats, as well as the rearmost row of seats. For example, whenever a recess is formed receding downwardly in a floor surface immediately behind the seat, the foremost or second row of seats may similarly suffer from the drawback.

In addition, from the standpoint of loading capacity of the vehicle, the structures disclosed in the above patent literatures also suffer from the following drawback. That is, the structure disclosed in Japanese Unexamined Utility Model Publication No. S61-153635 allows the rear seat of the front and rear seats to be selectively arranged into the upright state or the folded state. For he arrangement of the rear seat into the folded state, a dedicated recess should be formed in a floor behind the front seat for storing the rear seat. For a similar reason, the structure disclosed in Japanese Unexamined Patent Publication No. 2001-239870 also includes a recess for storing the seat formed in a floor below the seat to be arranged into the folded state.

Recently, the commonality of vehicular body platforms including a vehicular floor has been highly demanded over different vehicular models. However, the structures disclosed in Japanese Unexamined Utility Model Publication No. S61-153635 and Japanese Unexamined Patent Publication No. 2001-239870 require a dedicated recess for storing the rear seat in the floor of the passenger compartment. Because the recess is not always necessary in other vehicular models, the commonality of the platforms is sacrificed, which is unfavorable to cost reduction in the vehicular body.

Additionally, in the structure disclosed in Japanese Unexamined Patent Publication No. 2001-239870, the seat cushion shifts rearwardly during the arrangement operation of the seat back from the upright state into the folded state. Thus, with luggage stored behind the seat back, the luggage should be inevitably unloaded so as not to interfere against the arrangement operation of the seat back from the upright state into the folded state, which impairs utility of the vehicle.

Moreover, neither Japanese Unexamined Utility Model Publication No. S61-153635 nor Japanese Unexamined Patent Publication No. 2001-239870 refers to ensuring a storing space for a spare tire in the luggage compartment in the rear portion of the vehicle. Thus, if the spare tire is to be stored in the luggage compartment in the rear portion of the vehicle, the spare tire should be placed on the seat back in the folded state. This reduces a loading capacity of the luggage compartment.

The structure disclosed in Japanese Unexamined Patent Publication No. 2001-127820 does not require the recess for storing the seat, and allows the seat back to be arranged into the folded state from the upright state without the removal of the luggage stored behind the seat back. However, Japanese Unexamined Patent Publication No. 2001-127820 also does not refer to ensuring a storing space for the spare tire in the luggage compartment in the rear portion of the vehicle, and thus suffers from the similar drawback of the structures disclosed in Japanese Unexamined Utility Model Publication No. S61-153635 and Japanese Unexamined Patent Publication No. 2001-239870 in terms of the loading capacity. JP 2000 301 973 A discloses a seat belt system according to the preamble of claim 1 and comprising a cross member to be fixed to a vehicular body at its opposite end portions and a buckle connecting member for connecting a buckle of a seat belt with the cross member.

DE 198 02 077 A discloses a vehicle comprising a box-like trunk removably provided behind a seat of the vehicle.

JP11 124 006 A discloses a seat belt system in which a buckle protrudes from an opening formed in a seat cushion.

In view of the above problem, an object of the present invention is to provide a seat belt system for a vehicle in which the seat belt tension is directly transmitted to a vehicular body without being transmitted through a seat, even when a recess is formed receding downwardly in a floor surface immediately behind the seat, preferably in a favorable manner to loading capacity and commonality of platforms.

The object is solved according to the invention by the seat belt system according to claim 1, and by the vehicle according to claim 6. Preferred embodiments of the present invention are subject of the dependent claims.

Thus, according to the present invention, there is provided a seat belt system for a vehicle in which the seat belt tension is directly transmitted to a vehicular body without being transmitted through a seat, even when a recess is formed receding downwardly in a floor surface immediately behind the seat, in a favorable manner to loading capacity and commonality of platforms..

Accordingly, the load acting on the seat belt is transmitted to the vehicular body through the cross member. That is, even if the recess is formed receding downwardly in the vehicular floor immediately behind the seat, the load acting on the seat belt is or can be directly transmitted to the vehicular body without being transmitted through the seat. As a result, less rigidity is required in the seat, which reduces the thickness of the seat cushion (hence the entire seat). Additionally, the cross member advantageously increases the rigidity of the vehicular floor.

Preferably, the recess may be provided for at least partly storing a spare tire, and the cross member may be located so as to cause no interference against the spare tire during loading and unloading work of the spare tire into and from the recess.

Accordingly, even in a vehicle which stores the spare tire in the recess formed in the vehicular floor immediately behind the seat, the load acting on the seat belt is advantageously transmitted to the vehicular floor or the vehicle body while the spare tire can be easily stored.

The seat may be selectively arranged into an upright position where a seat back of the seat is in substantially upright near the rear edge of a seat cushion of the seat, or into a folded position where the seat back of the seat is forwardly folded down substantially onto the seat cushion of the seat.

The seat cushion may be mounted on the vehicular floor movably in at least one of the vehicular longitudinal direction and vertical direction following the selective arrangement operation of the seat back, the buckle connecting member may be fixed to the cross member at a first fixing portion and fixed to the seat cushion at a second fixing portion between the first fixing portion and the buckle, and the length between the first fixing portion and said second fixing portion may be predetermined so as to allow said buckle connecting member to substantially accommodate the motion of the seat cushion.

Accordingly, a largely-expanded space is ensured for storing luggage or other stuff on the seat back in the folded position because the seat is reduced in thickness, while the buckle is prevented from adversely dropping down through the clearance between the seat back and seat cushion because the buckle connecting member is fixed to the cross member at the first fixing portion and fixed to the seat cushion at the second fixing portion between the first fixing portion and the buckle. Moreover, the length between the first fixing portion and the second fixing portion is predetermined so as to allow the buckle connecting member to accommodate the motion of the seat cushion. Thus, in spite of the fact that the seat cushion is movable in at least one of the vehicular longitudinal direction and vertical direction following the selective arrangement operation of the seat back, the buckle connecting member causes no interference against the motion of the seat cushion.

Still further preferably, a first guide mechanism may be provided for guiding the motion of the seat cushion while maintaining a substantially constant distance between the first fixing portion and the second fixing portion during the motion of the seat cushion.

Accordingly, the need for tolerance is eliminated from the buckle connecting member, thereby further enhancing the occupant-restraint performance of the seat belt during an automotive collision or other accidents.

Still further preferably, a depression may be formed on an upper portion of the seat cushion and/or at the seat back for at least partly storing the buckle.

Accordingly, even with the seat back in the folded position, the buckle can be stored in the depression, which lowers the height of the seat, thereby further expanding the luggage compartment as a space formed on the seat in the folded position.

Still further preferably, the cross member may be concealed by the seat back from above with the folded position of the seat back.

Accordingly, the cross member is prevented from impairing the visual appearance of the luggage compartment.

In accordance with the present invention, there is provided a vehicle according to the present invention or the preferred embodiment thereof.

Preferably, a box-like sub trunk may be removably provided behind the seat. The seat and the sub trunk may be adapted so that a back surface of the seat back and an upper surface of the sub trunk substantially align with each other, and the recess is at least partly covered with the seat back from above at its front portion and at least partly covered with the sub trunk from above at its rear portion, with the folded position.

Accordingly, small luggage is accommodated in the box-shape sub trunk disposed on the floor behind the seat. Additionally, the seat is stored with its seat back in the folded position without the need for any dedicated recess for storing the seat, in other words, without the sacrifice of the commonality of vehicular body platforms, because the back surface of the seat back and the upper surface of the sub trunk align with each other with the seat back in the folded position. Besides above, large luggage can be stored on a continuous planar surface constituted by the back surface of the seat back and the upper surface of the sub trunk. Moreover, in a normal state, the recess is covered with the seat from above at its front portion, and covered with the sub trunk from at its rear portion, which does not impair the visual appearance. In this case, the sub trunk is removably attached to the floor of the luggage compartment. This allows the spare tire to be smoothly stored in the recess. Additionally, the sub trunk can be detached if unnecessary, enhancing the utility. Moreover, the recess can be used for storing other luggage than a spare tire if the spare tire can be stored at other portions in the vehicle. Thus, the commonality of the platforms is maintained between the model in which the spare tire is stored in the recess and the other model in which the spare tire is not stored in the recess.

More preferably, the sub trunk may comprise a central section at the laterally central position and a pair of side sections on the right and left sides of the central section, respectively, with the side sections being permanently attached to the floor in the floor behind the seat, and the central section being removably attached to the floor behind the seat.

Accordingly, the volume of the removable section is smaller, thereby enhancing the ease in detaching/attaching operation of the sub trunk.

Further preferably, an engagement structure may be provided between the central section and the side sections so as to allow the central section to releasably engage with the side sections.

Accordingly, ease in attaching/detaching operation of the central section is enhanced, and secure engagement of the central section with the side sections (in other words, with the luggage floor) is ensured during the use of the central section.

Still further preferably, the floor may include a lower-situated front floor, a higher-situated rear floor continuing to the front floor, and a step raising the rear floor at the rear edge of the front floor by a predetermined height, the seat may be mounted on the rear floor, the seat cushion may comprise a seat cushion frame bending down towards its front edge and a cushion material covering at least over the cushion frame. Most preferably, a second guide mechanism may be provided which downwardly displaces the seat cushion during the fold down operation of the seat back and guides the seat cushion so that the front edge of the seat cushion frame is located ahead of the step with the seat back in the folded position.

Accordingly, the seat is disposed on the higher-situated rear floor continuing to the lower-situated front floor, and the seat back is displaced downwardly via the second guide mechanism by the fold-down operation of the seat back while the seat back is forwardly folded down. This lowers the height of the seat, thereby further enhancing the loading capacity. Moreover, the cushion frame of the seat bends down towards its frontal edge, which ensures the thickness at the front and upper portion of the seat cushion, thereby providing the favorable seating comfort of the seat. Further, while the seat back is forwardly folded down, the fold-down operation causes the frontal edge of the cushion frame to forwardly shift up to the position ahead of the step in the floor. Thus, even with luggage stored behind the seat back in the upright position, the seat is surely prevented from interfering against the luggage during the arrangement of the seat back into the folded position, so that the seat back is folded down without impairing the utility. At this time, the front edge of the cushion frame, curving downwardly in shape, is located ahead of the step in the floor of the passenger compartment, thereby avoiding the interference between the front edge of the cushion frame and the rear floor. It should be appreciated that the structure of the floor surface in the rear portion of the vehicle, that is, the structure with the lower-situated front floor, the higher-situated rear floor, and the step connecting them, has been widely adopted in conventional vehicles and thus does not prevent the communization of platforms.

Other features, aspects, and advantages of the present invention will become apparent from the following description of the invention which refer to the accompanying drawings. These and other objects, features and advantages of the present invention will become more apparent upon reading of the following detailed description of preferred embodiments and accompanying drawings. It should be understood that even though embodiments are separately described, single features thereof may be combined to additional embodiments. It should be understood that even though embodiments are separately described, single features thereof may be combined to additional embodiments
FIG. 1 is a partially sectional side view of a rear portion of a vehicle equipped with a luggage compartment structure in accordance with the preferred embodiment of the present invention, including a rear seat of the vehicle, with the seat back of the rear seat in an upright position.
FIG. 2 is a partially sectional side view of the rear portion of the vehicle, with the seat back of the rear seat in the folded position.
FIG. 3 is an enlarged side view of the rear seat with the seat back in the upright position.
FIG. 4 is an enlarged side view of the rear seat with the rear seat in the folded position.
FIG. 5 is a perspective view showing a frame structure of the rear seat and itsattaching structure to a floor
FIG. 6 is a perspective view of a luggage compartment with a sub trunk disposed on the floor in the luggage compartment of the vehicle.
FIG. 7 is a perspective view of the luggage compartment with a storage recess being exposed by removing a central section of the sub trunk.
FIG. 8 is a perspective view showing the structure of the central section and side sections of the sub trunk.
FIG. 9 is a perspective view of an engaging portion between the central section and the side sections of the sub trunk
FIG. 10 is A perspective view of a seat cushion of the rear seat, a buckle of a seat belt system for the seat, and a cross member.
FIG. 11 is an illustrative view showing an example of the length of a buckle connecting member.
FIG. 12 is an illustrative view showing another example of the length of a buckle connecting member.
.

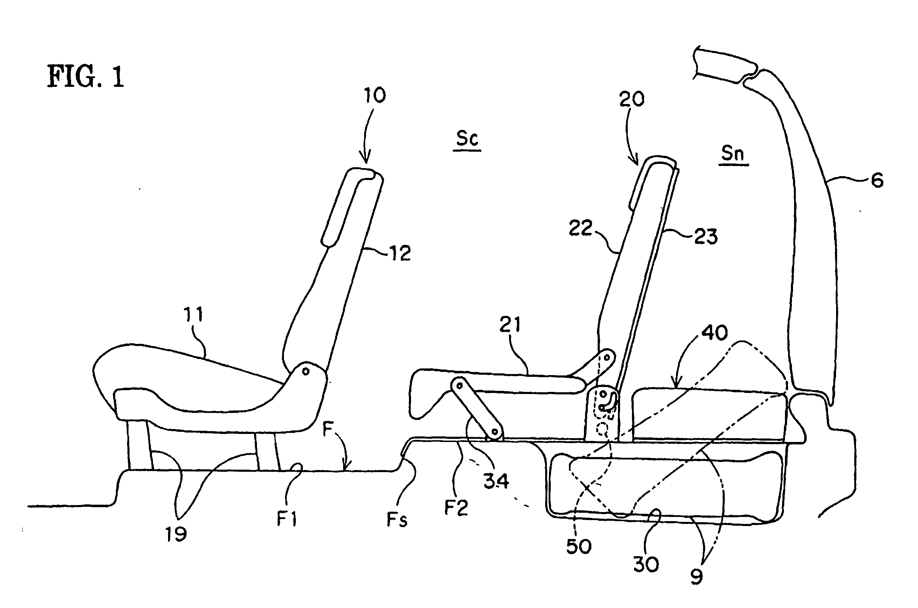

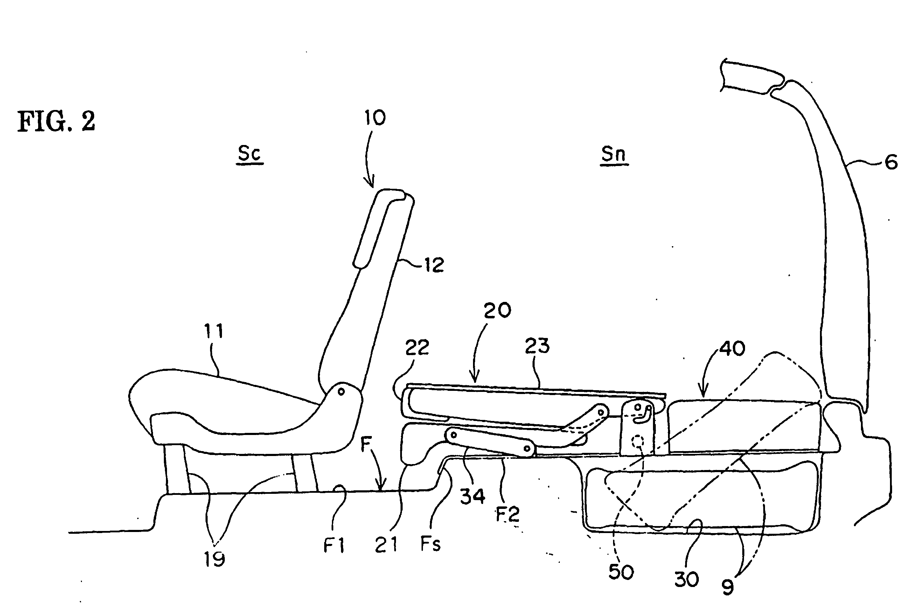

A preferred embodiment of the present invention will now be described in detail with reference to the drawings. The description is made for the rearmost row of seats in a plural rows of seats arranged in the vehicular longitudinal direction, by way of example. FIG. 1 and FIG. 2 show an illustrative side view of a rear portion of a vehicle equipped with a seat belt system according to a preferred embodiment of the present invention, including the rearmost row of seats. FIG. 1 includes a seat back of the rearmost row of seats being in an upright position. FIG. 2 includes the seat back of the seat being in a folded position. The vehicle is equipped with three rows of seats disposed in the longitudinal direction of a passenger compartment Sc. FIG. 1 and FIG. 2 show only a middle seat 10 and a rear seat 20 (rearmost row of seats), omitting a front seat.

As shown in FIG. 1 and FIG. 2, a luggage compartment Sn is formed so as to substantially integrate with the passenger compartment Sc, without a partition which comparts the passenger compartment Sc and the luggage compartment Sn in the rear portion of the vehicle. The rear end of the luggage compartment Sn is preferably defined by a so-called tailgate 6, which opens and closes the rear end. A floor F in the rear portion of the vehicle includes a front floor F1 preferably situated lower and a rear floor F2 preferably situated higher. The front floor F1 and the rear floor F2 continue to each other preferably via a step Fs which raises the rear floor F2 by a predetermined amount at the rear end of the front floor F1. On the front floor F1, the middle seat 10 is disposed. On the rear floor F2, the rear seat 20 as the rearmost seat is disposed.

The floor F, being constructed as above in the rear portion of the vehicle and including a front portion preferably situated lower and a rear portion preferably situated higher being connected with each other at the step, has been adopted to conventional vehicles without sacrificing commonality of platforms. On the lower surface of the step, a supporting member for a rear suspension mechanism, for example, is or can be mounted. The middle seat 10 is conventional in structure, comprising a seat cushion 11 and a seat back 12 constructed in such a way that the lower end of the seat back 12 is attached to the rear end of the seat cushion 11 or a seat structure of the middle seat 10. The seat cushion 11 or the seat structure is fixed or fixable on the front floor F1 via a seat bracket 19. The middle seat 10 may be of the bench type or of the separated type, where two or more seats are arranged substantially side by side.

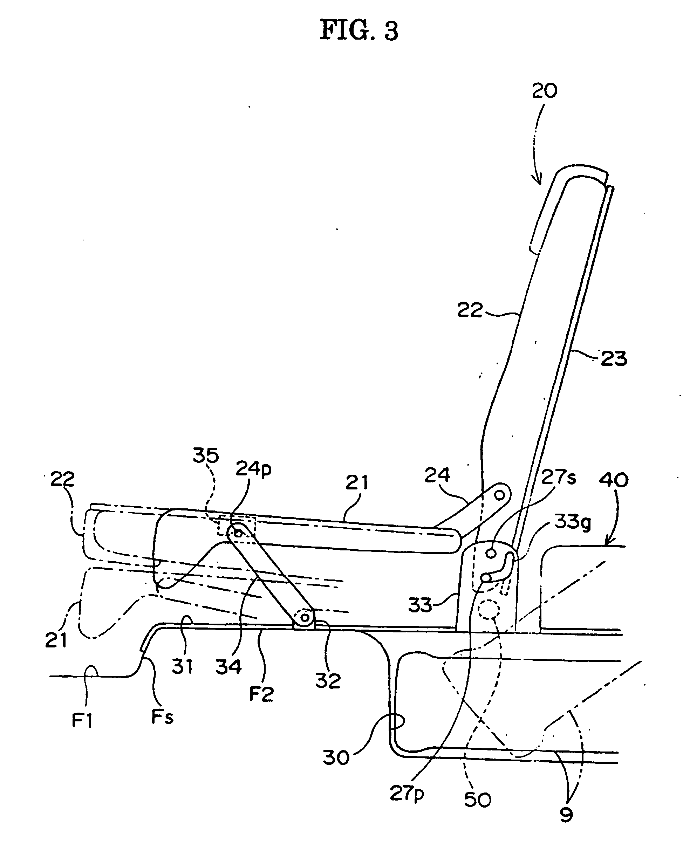

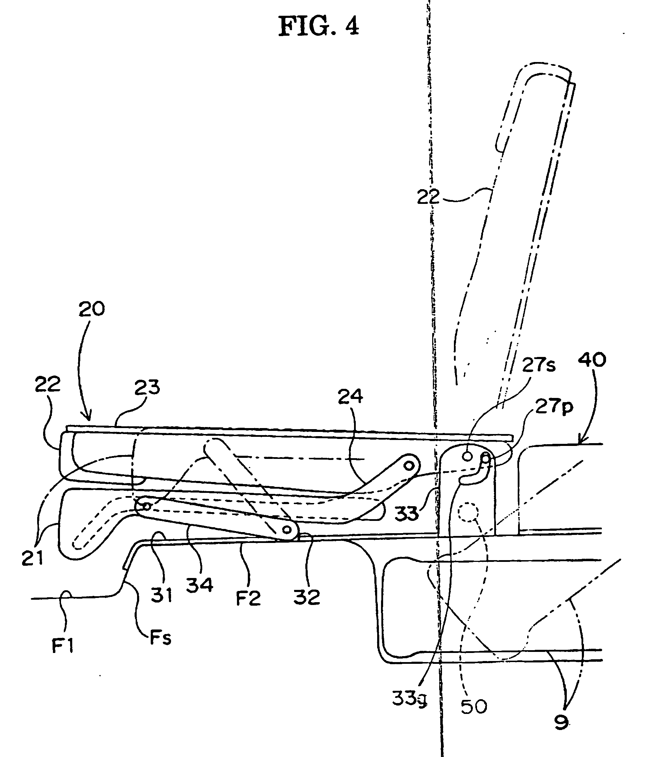

As shown in detail in FIG. 3 and FIG. 4, the rear seat 20 can be selectively arranged into the upright position (as a preferred first position) or the folded position (as a preferred second position). With the upright position, a seat back 22 is in a substantially upright state on the rear end of a seat cushion 21 (refer to FIG. 3) e.g. so as to allow a passenger to sit thereon. With the folded position, the seat back 22 is forwardly folded down at least partly onto the seat cushion 21 (refer to FIG. 4). The back surface of the seat back 22 is at least partly covered with a so-called decorative panel 23. On the rear floor F2 behind and/or at least partly under the rear seat 20, a box-like sub trunk 40 is provided. The sub trunk 40 is suitable e.g. for storing small packages, tools, etc.

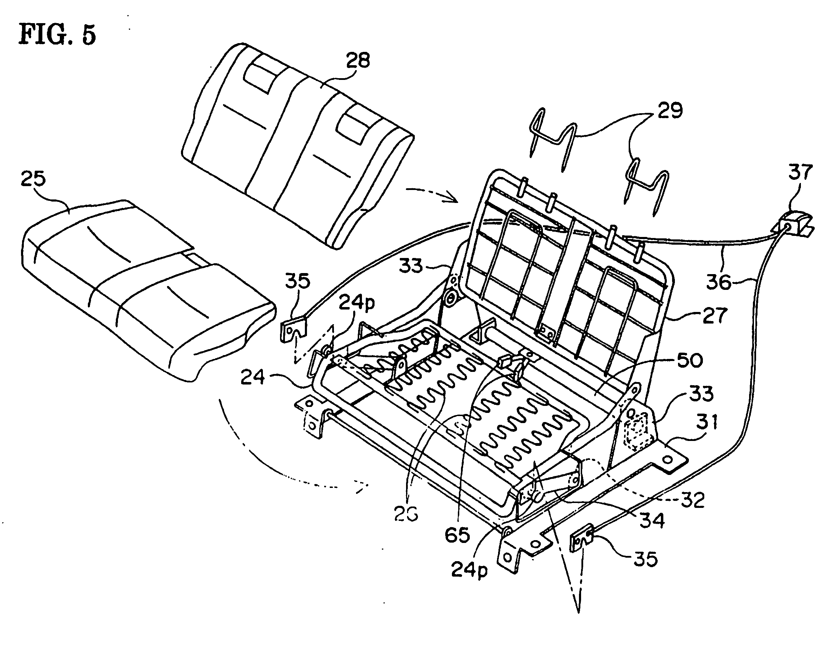

FIG. 5 is a perspective view showing a frame structure of the rear seat 20 and its attaching structure onto the rear floor F2. The rear seat 20 is substantially the same as the conventional one in structure. The rear seat 20 may be of the bench type or of the separated type, where two or more seats are arranged substantially side by side. Particularly, the rear seat 20 comprises frames (a seat cushion frame 24 and a seat back frame 27, referred to as cushion frame 24 and back frame 27, respectively hereinafter) attached with cushion bodies 25 and 28 over the frames 24 and 27. The cushion bodies 25 and 28 preferably are made of foam or other materials with an adequate resilience. Inside the cushion frame 24, springs 26 preferably extend across the frame 24.

At the top of the back frame 27, frames 29 of the headrest are or can be attached. Behind and below the rear seat 20, as will be described later, a cross member 50 is or can be provided. On the cross member 50, a buckle 65 of the seat belt or restraint system for the rear seat is or can be fixed.

As shown in FIG. 3 through FIG. 5, on the rear floor F2, a pair of lateral (right and left) seat brackets 31 are fixed for mounting the rear seat 20. At an intermediate position, preferably at a roughly middle portion, and at or near a rear end portion of the seat bracket 31, a middle or intermediate vertical wall 32 and a rear vertical wall 33 are formed, respectively.

The rear vertical wall 33 of the seat bracket 31 pivotally supports a pivot member 27s (referred to as pivotal axis) projecting substantially in the vehicular lateral direction at a lower end portion of the back frame 27. The rear vertical wall 33 is also formed with a guide slot 33g slidably receiving a pin 27p projecting substantially in the vehicular lateral direction at the lower end portion of the back frame 27. With this structure, the seat back 22 is or can be selectively arranged into the upright position or the folded position through the pivotal motion about the pivotal axis 27s in the forward or rearward direction with the pin 27p being guided by the guide slot 33g.

The middle vertical wall 32 of the seat bracket 31 pivotally supports a lower end portion of a link member 34 (referred to as guide link). A frontal portion of the cushion frame 24 is supported by the guide link 34. A rear end portion of the cushion frame 24 is pivotally supported to a lower portion of the seat back frame 27.

An upper portion of the guide link 34 is in pivotable engagement with a striker 24p projecting substantially in the vehicular lateral direction at a frontal portion of the cushion frame 24. The striker 24p is in releasable engagement with a latch 35 which is remotely operated via a wire cable 36. The latch 35 is pivotally attached to the cushion frame 24, and caused to pivot by the operation of the switch 37 at the rear end portion of the luggage compartment Sn via the wire cable 36. The latch 35 and the striker 24p latch the rear seat 20 in the folded position.

With the engagement between the latch 35 and the striker 24p, as shown in FIG. 1 and FIG. 3, the seat cushion 21 is positioned relatively higher with respect to the rear floor F2, allowing an occupant to be seated therein more comfortably. From this state, the operation of the wire cable 36 causes the latch 35 to pivot and thus disengage from the striker 24p, which in turn allows the guide link 34 to pivot forwardly and downwardly. Interlocked with the pivotal motion of the guide link 34, the seat cushion 21 is displaced forwardly and downwardly guided by the guide link 34.

The displacement of the seat cushion 21 causes the seat back 22 to forwardly pivot via the cushion frame 24, thereby arranging the seat back 22 into the folded position. On the other hand, while the seat cushion 21 is displaced rearwardly and upwardly to arrange the seat back 22 into the upright position, each of the members act in reverse to the above.

As described above, preferably no partition is provided comparting the passenger compartment Sc and the luggage compartment Sn, and thus the luggage compartment Sn substantially integrate with the passenger compartment Sc. However, with the seat back 22 of the rear seat 20 in the upright position, the seat back 22 of the rear seat 20 at least partly comparts the passenger compartment Sc and the luggage compartment Sn (refer to FIG. 1). With the seat back 22 of the rear seat 20 in the folded position, the seat back 12 of the middle seat 10 at least partly comparts the passenger compartment Sc and the luggage compartment Sn, while the luggage compartment Sn is expanded (refer to FIG. 2).

The seat cushion 21 of the rear seat 20 preferably is reduced in thickness as much as possible to attain a largely-expanded luggage compartment Sn with the seat back 22 in the folded state. In order to offer the favorable seating comfort to a seated occupant, however, the cushion frame 24 of the seat cushion 21 is formed so as to bend or sloped down towards its front end. With this shape of the cushion frame 24, the thickness of the cushion material is ensured at its frontal and upper portion, thereby offering the favorable seating comfort of the seat 20.

In the seat cushion 21, its components such as the cushion frame 24 and the guide link 34 are dimensioned so that the front end of the cushion frame 24 bending downwardly in shape is located ahead of the step Fs in the vehicular floor F after the seat cushion 21 is displaced forwardly and downwardly, interlocked with the folding-down motion of the seat back 22. On the lower surface of the step Fs, there are fixed the components such as the supporting member for the rear suspension mechanism, which are not shown in detail.

As described above, the rear seat 20 is disposed on the preferably higher-situated rear floor F2 continuing to the lower-situated front floor F1 via the step Fs. When the seat back 22 is forwardly folded down onto the seat cushion, the fold-down motion of the seat back 22 causes the seat cushion 21 to move forwardly and downwardly via the action of the guide link 34. This lowers the height of the seat 20 in the folded position, thereby increasing a loading capacity of the vehicle. At this time, the front end of the cushion frame 24, being bent down, is located ahead of the step Fs in the vehicular floor F, which causes no interference between the front end of the cushion frame 24 and the rear floor F2.

Moreover, when the seat back 22 is forwardly folded down, its fold-down motion causes the front end of the cushion frame 24 of the seat cushion 21 to be forwardly shifted up to the position ahead of the step Fs in the vehicular floor F. This surely avoids the interference between the seat 20 and the luggage during the arrangement operation of the seat back 22 into the folded position, even with luggage stored behind the seat back 22 in the upright position. Therefore, the seat back 22 is arranged into the folded position practically without degradation in utility.

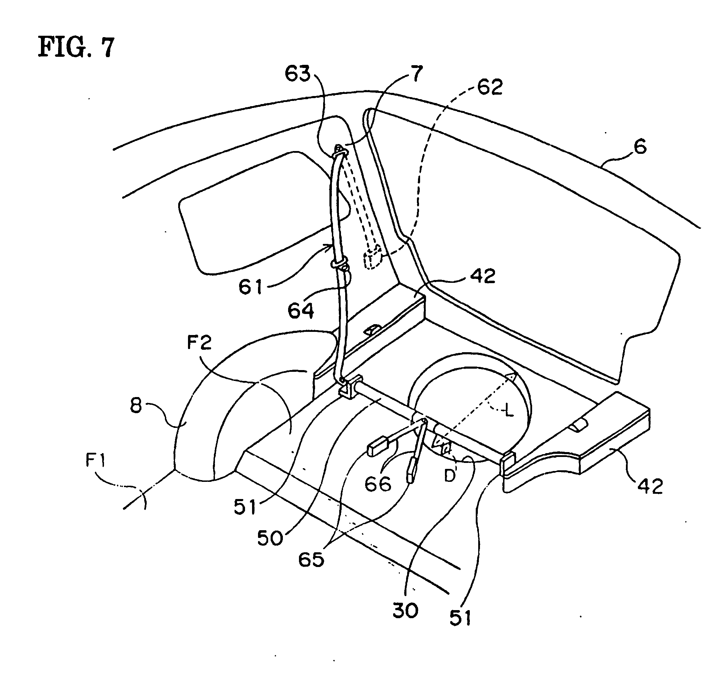

In the rear floor F2 of the floor F in the rear portion of the vehicle, a storage recess 30 is formed receding downwardly. A front portion of the storage recess 30 is preferably substantially concealed by the rear seat 20 from above, and a rear portion of the storage recess 30 is preferably substantially concealed by the sub trunk 40 from above. The storage recess 30 is preferably dimensioned so as to store a spare tire 9, an electric battery, tools or other components for the vehicle and/or additional luggage. Particularly, as shown in FIG. 7 described later, the recess 30 is circular with a predetermined diameter in a top plan view, and has a predetermined depth.

In conventional vehicles, a recess is generally formed in a floor of a luggage compartment for storing a spare tire or other parts. The storage recess 30 is attained by use of the recess, thus does not sacrifice commonality of platforms among vehicular bodies.

As described above, with the seat back 22 of the rear seat 20 in the folded position, the back surface of the seat back 22 and the upper surface of the sub trunk 40 substantially align with each other or are arranges substantially at the same height so as to be substantially flush with each other at a distance with respect to each other, preferably substantially adjacent to each other. Thus, the seat 20 can be stored with its seat back 22 in the folded position without any dedicated recess in the floor, which does not sacrifice commonality of platforms among vehicular bodies. Moreover, relatively larger luggage can be stored on the substantially continuous planar surface constituted by the back surface of the seat back and the upper surface of the sub trunk 40. Even with the seat back 22 in the folded position, the decorative panel 23 on the back surface of the seat back 22 faces upwardly, without any degradation in visual appearance.

Further, luggage can be stored in the storage recess 30 formed in the rear floor F2 and below the rear seat 20 and/or the sub trunk 40. Thus, a larger loading capacity is ensured in comparison with conventional structures. Additionally, in a normal state, the storage recess 30 is concealed by the rear seat 20 from above at the frontal portion, and concealed by the sub trunk 40 from above at the rear portion, which does not impair visual appearance. Moreover, even with the sub trunk 40 being provided on the rear floor F2 behind the rear seat 20, the storage recess 30 is dimensioned so as to store the spare tire 9 of the vehicle, which allows the spare tire 9 to be smoothly stored below the sub trunk 40 and the rear seat 20,

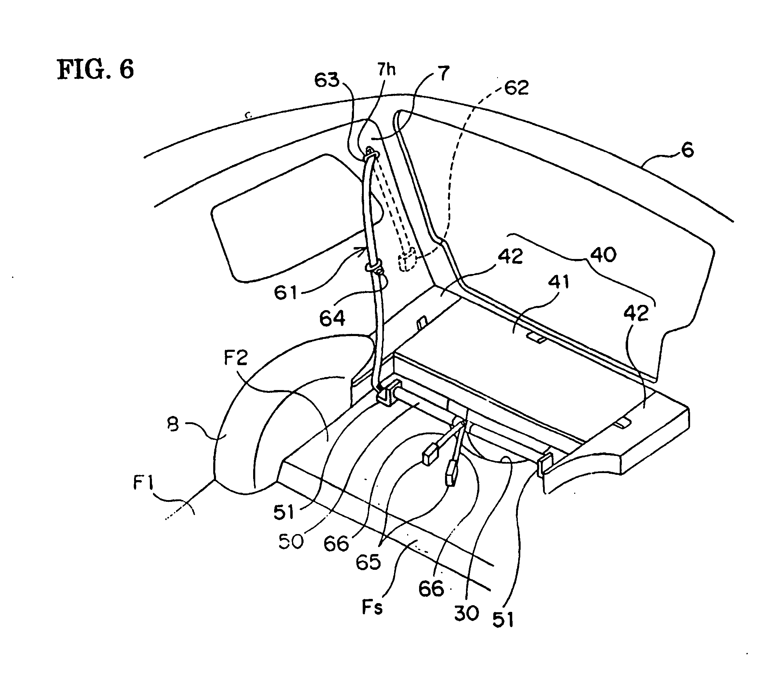

As shown in FIG. 6 and FIG. 7, the sub trunk 40 comprises a central section 41 at the laterally central position, and a pair of side sections 42 on the right and left sides of the central section 41, respectively. The central section 41 preferably is removably attached to the rear floor F2. The side sections 42 preferably are permanently attached to the rear floor F2 rearward of wheel wells 8.

The lateral (right and left) side sections 42 substantially are in the box-shape elongated in the longitudinal direction, and the central section 41 substantially is in the box-shape elongated in the lateral direction and/or compressed in the vertical direction. With the central section 41 of the sub trunk 40 being attached to the rear floor F2, the storage recess 30 is at least partly concealed from above. Instead of the separated structure of the sub trunk 40 being partly removable from the floor F2, the sub trunk 40 may be formed as a one body being removable from the floor F2 as a whole.

As described above, the sub trunk 40 is constructed so that at least a part of the sub trunk 40, concealing the rear portion of the storage recess 30 from above (the central section 41), is removably attached to the floor F2 of the luggage compartment Sn. This allows some objects (particularly, the spare tire 9) to be smoothly stored in the storage recess 30. Additionally, the sub trunk 40 can be detached if unnecessary, enhancing the utility.

More advantageously, the sub trunk 40 is separated into laterally central section 41 and side portions 42 on the right and left sides, with the central section 41 being removably attached to the rear floor F2 and the side section 42 being permanently attached to the rear floor F2. Thus, the volume of the removable section is smaller, thereby enhancing the ease in detaching/attaching operation of the sub trunk 40.

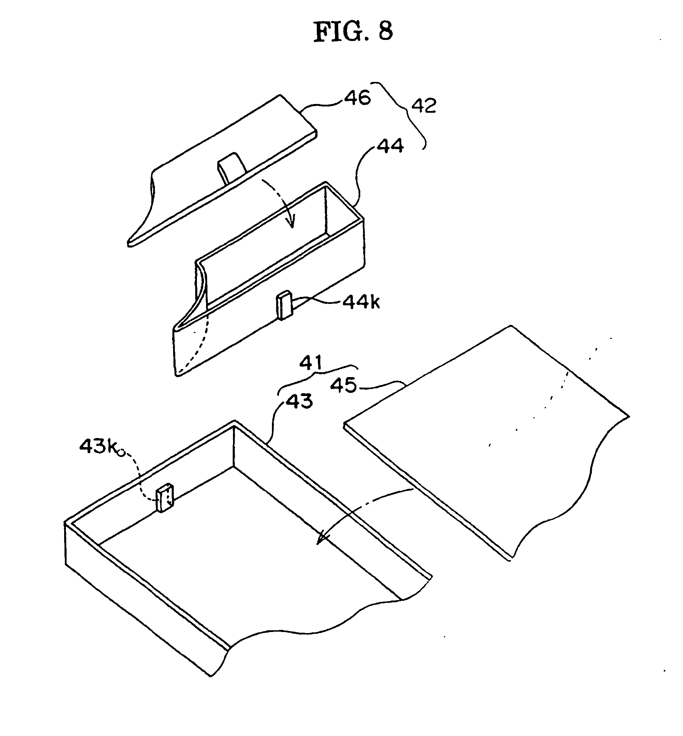

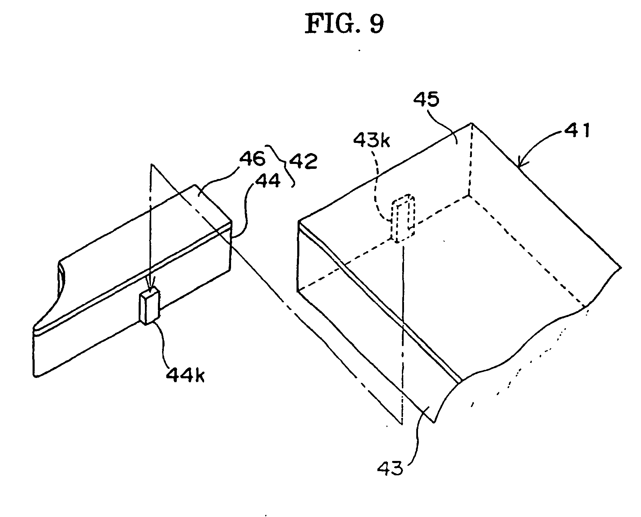

As shown in FIG. 8 and FIG. 9, the central section 41 and the side sections 42 of the sub trunk 40 are formed in the box-shape which can be opened and ciosed. Particularly, the sections 41 and 42 comprise box-shape main bodies 43, 44, and cover plates 45, 46. The cover plates 45, 46 cover the main bodies 43, 44 from above so as to open and close them, respectively. Front portions of the side sections 42 are formed in curved surfaces substantially matching or conforming the shape of the rear portion of the wheel well 8 of the vehicular body.

An inboard surface of the box-shape main body 44 of the side section 42 is provided with an engagable projection 44k. An outboard surface of the box-shape main body 43 of the central section 41 is provided with an engaging recess 43k corresponding in position to the engagable projection 44k. With this structure, the engaging recess 43k engages with or disengages from the engagable projection 44k of the side section 42, when the central section 41 is lifted down into attachment with the floor F2 or lifted up away from the floor F2.

As described above, an engagement structure, comprising the engaging recess 43k and the engagable projection 44k, is provided between the central section 41 and the side sections 42 of the sub trunk 40 so as to allow the central section 41 to removably engage with the side sections 42. This enhances ease in attaching/detaching operation of the central section 41, and ensures secure engagement of the central section 41 with the side sections 42 (in other words, with the rear floor F2) during the use of the central section 41.

Described next is a seat belt system for the rear seat 20.

As shown in FIG. 6 and FIG. 7, a retractor 62 of the seat belt system for the rear seat 20 is or can be attached within an interior trim 7 or C-pillar constituting or being part of a rear side surface of the luggage compartment Sn. A seat belt webbing 61 is or can be reeled out from the retractor 62 to extend toward a shoulder anchor 63 preferably substantially upwardly, and drawn inboardly through a slot 7h in the trim 7. Then, the webbing 61 turns downwardly and/or forwardly at the shoulder anchor 63, and reaches the rear floor F2 or a lateral portion of the vehicle (e.g. the wheel well 8) to which its distal end is or can be fixed. At an intermediate point or a midway point of the inboardly-drawn portion of the belt webbing 61, a tongue 64 is provided.

As apparent from FIG. 6 and FIG. 7, a cross member 50 is provided in this embodiment. The cross member 50 extends substantially across the vehicular width above or near the storage recess 30 and is or can be fixed to the vehicular body at its opposite ends. Particularly, the opposite ends of the cross member 50 are fixed to a pair of brackets 51 attached near laterally opposite ends of the floor F2 in the luggage compartment Sn and/or lateral portions of the vehicle (e.g. the wheel wells 8), respectively. With this structure, the cross member 50 allows the seat belt tension to be directly transmitted to the vehicular body not through the rear seat 20, even with the storage recess 30 receding downwardly in the floor F2 of the luggage compartment Sn immediately behind the rear seat 20. The cross member 50 may not be limited to the straight shape as shown in the drawings, but formed in other forms such as a curvature or bent form (e.g. a substantially U- or V-shape pointing forwardly). In addition, the cross-section of the cross member 50 is not limited to the circle as shown in the drawings, but formed in other shapes such as an ellipse, a rectangle, a trapezoidal shape, a triangle, a polygonal shape etc.

At the cross member 50, a first end of a buckle connecting member 66 is fixed. The other end or a second end of the buckle connecting member 66 is connected with a seat belt buckle 65 which is releasably engagable with the tongue 64 of the belt webbing 61. Two sets of the buckle 65 and the buckle connecting member 66 are correspondingly provided for a right side seat and a left side seat. The buckle connecting member 66 preferably is made of a material similar to the seat belt webbing 61. Alternatively or additionally, the buckle connecting member 66 may comprise a rigid or semi-rigid portion such as a tube portion, a metal wire, etc.

As described above, the end portion of the buckle connecting member 66 is fixed to the cross member 50. Thus, during a vehicular collision or other accidents, load acting on the belt webbing 61 with the engagement between the tongue 64 and the buckle 65 is transmitted to the vehicular body through the cross member 50. That is, even with the storage recess 30 receding downwardly in the floor F2 of the luggage compartment Sn immediately behind the rear seat 20, load acting on the seat belt webbing 61 is directly transmitted to the vehicular body without transmitted through the rear seat 20.

As a result, less rigidity is required for the rear seat 20, which reduces the thickness of the seat cushion 21 (hence the entire seat). Especially, less rigidity is required for the rear seat 20 which is selectively arranged into the upright position of the seat back 22 or the folded position of the seat back 22, so that the seat cushion 21 is or can be further reduced in its thickness, thereby preferably attaining a largely-expanded luggage compartment Sn. Moreover, the cross member 50 advantageously increases the rigidity of the rear floor F2.

The cross member 50 is located so as to cause no interference against object (preferably the spare tire 9) during loading/unloading work of the object (preferably the spare tire 9) to/from the storage recess 30 as a preferred spare-tire well (refer to FIG. 1 and FIG. 2). Accordingly, even in a vehicle which stores the spare tire 9 in the storage recess 30 in the rear floor F2 immediately behind the rear seat 20, the load acting on the seat belt webbing 61 is directly transmitted to the vehicular body during a vehicular collision or other accidents while spare tire 9 can be easily stored. Preferably, the cross member 50 crosses the storage recess 30 at a position so as to span or bridge the storage recess 30 at a position from the front edge thereof at a distance D (i.e. substantially along the vehicular longitudinal direction) less than about 40%, more preferably less than about 30%, most preferably less than about 25% of the diagonal length L of the storage recess 30 (see FIG. 7).

The cross member 50 is located so as to be at least partly concealed by the seat back 22 from above with the seat back 22 in the folded position (refer to FIG. 2 and FIG. 4). Accordingly, the cross member 50 is prevented from impairing the visual appearance of the luggage compartment Sn with the seat back 22 in the folded position.

As described above, the rear seat 20 is selectively arranged into the upright position of the seat back 22 or the folded position of the seat back 22, and the seat cushion 21 or the rear seat 20 is mounted or mountable on the rear floor F2 so as to move in at least one of the vehicular longitudinal direction and the vertical direction (in both the directions in this embodiment) during the arrangement or folding operation of the seat back 22. The buckle connecting member 66 accommodates the motion of the seat cushion.

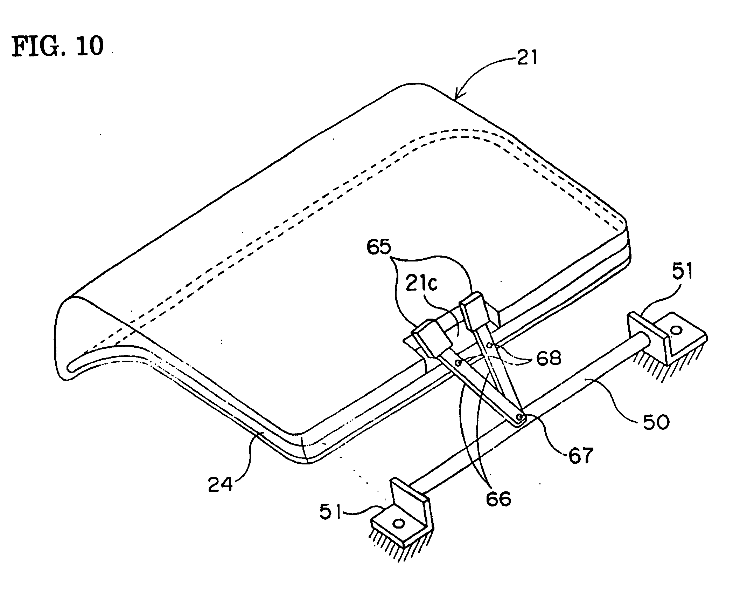

As shown in FIG. 10, the buckle connecting member 66 is attached to the seat cushion 21 (particularly, at the rear end of the cushion frame 24) via a second fixing portion 68 located between the buckle 65 and a fixing portion 67 (a first fixing portion) to the cross member 50. The buckle connecting member 66 may be fixed to the cross member 50 and the cushion frame 24 by use of a variety of conventional methods such as screwing or riveting.

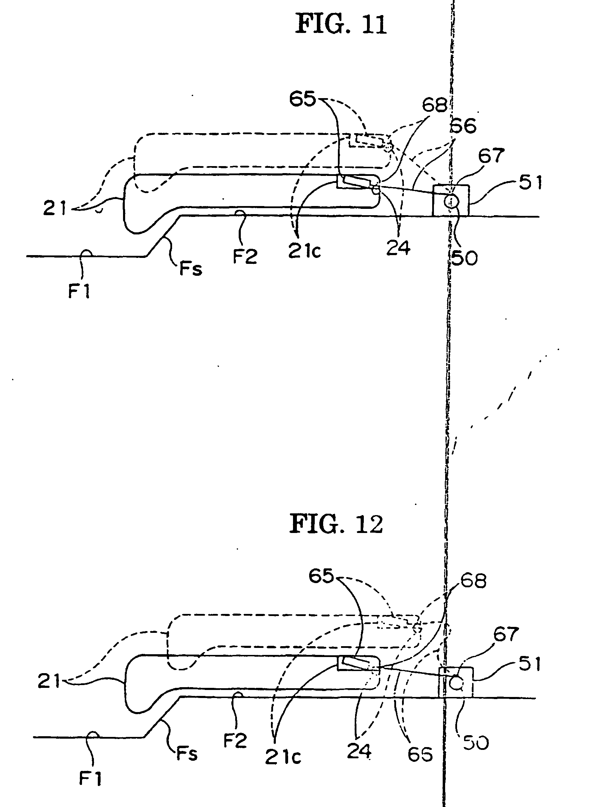

The length between the first fixing portion 67 and the second fixing portion 68 is predetermined or predeterminable so as to allow the buckle connecting member 66 to accommodate or compensate the motion of the seat cushion 21. Particularly, the distance between the first fixing portion 67 and the second fixing portion 68 preferably is maintained substantially constant during the motion of the seat cushion 21 as shown in FIG. 11. In other words, the guide link 34 of the rear seat 20 is concurrently dimensioned so as to guide the seat cushion 21 while maintaining a substantially constant distance between the first fixing portion 67 and the second fixing portion 68.

As described above, the buckle connecting member 66 is attached or attacheable to the seat cushion 21 via a second fixing portion 68 located between the buckle 65 and a fixing portion 67 to the cross member 50. Accordingly, the buckle 65 is prevented from adversely dropping down through the clearance between the seat back 22 and seat cushion 21. In addition, the length between the first fixing portion 67 and the second fixing portion 68 is predetermined so as to allow the buckle connecting member 66 to accommodate the motion of the seat cushion 21. Accordingly, in spite of the fact that the seat cushion 21 is movable in at least one of the vehicular longitudinal direction and vertical direction following the selective arrangement operation of the seat back 22, the buckle connecting member 66 causes no interference against the motion of the seat cushion 21.

Particularly, in this case, the guide link 34 provided in the rear seat 20 guides the motion of the seat cushion 21 while maintaining a substantially constant distance between the first fixing portion 67 and the second fixing portion 68, preferably during the motion of the seat cushion 21. This eliminates the need for tolerance from the buckle connecting member 66, thereby further enhancing the occupant-restraint performance of the seat belt webbing 61 during an automotive collision or other accidents.

Instead, as shown in FIG. 12, the buckle connecting member 66 may include tolerance (as indicated by broken lines in FIG. 12) which allows the buckle connecting member 66 to accommodate or compensate for the motion of the seat cushion 21. This does not require so high dimensional accuracy in the components interlocked with the motion of the seat cushion 21 guided by the guide link 34, thereby easing in production and reducing its cost.

Moreover, as apparent from FIG. 10, a depression 21c is formed on an upper and rear portion of the seat cushion 21 (particularly, on a upper and rear portion of the cushion body 25) for storing the buckle 65. Accordingly, even with the seat back 22 in the folded position, the buckle 65 is stored in the depression 21 c, thereby lowering the height of the seat. This further expands the luggage compartment Sn.

Although the above description is made for an automobile equipped with three rows of seats, the present invention is not limited to such an automobile. For example, the present invention may be advantageously adopted to vehicles with conventional two rows of seats or four or more rows of seats, wherever the vehicles have a rear or luggage compartment substantially integrating with a passenger compartment in a rear portion of the vehicle. Moreover, the present invention is not limited to the rearmost seat. For example, the present invention may be advantageously adopted to other seats such as the foremost seat or second row of seats, wherever a recess is formed receding downwardly in a floor immediately behind the seat. In this manner, the present invention is not limited to the embodiment above, but may be subjected to a variety of modification or engineering change without departing from the scope of the invention as defined in the claims.

## Claims

1. A seat belt system for a vehicle, the vehicle including a seat (20) disposed on a floor (F) of the vehicle and a recess (30) formed substantially downwardly in the floor (F) immediately behind and/or at least partly under the seat (20), comprising,
a cross member (50) to be fixed to a vehicular body at its opposite end portions so as to extend substantially across at least part of the vehicular width above the recess (30), and
a buckle connecting member (66) for connecting a buckle (65) of a seat belt for the seat (20) with said cross member (50),
wherein the seat (20) is selectively arranged into an upright position where a seat back (22) of the seat (20) is in substantially upright near the rear edge of a seat cushion (21) of the seat (20), or into a folded position where the seat back (22) of the seat (20) is forwardly folded down substantially onto the seat cushion (21) of the seat (20)
wherein the seat cushion (21) is mounted on the vehicular floor movably in at least one of the vehicular longitudinal direction and vertical direction following the selective arrangement operation of the seat back (22),
wherein said buckle connecting member (66) is to be fixed to said cross member (50) at a first fixing portion (67),
**characterized in that**
said buckle connecting member (66) is to be fixed to the seat cushion (21) at a second fixing portion (68) between said first fixing portion (67) and the buckle (65), and
the length between said first fixing portion (67) and said second fixing portion (68) is predetermined so as to allow said buckle connecting member (66) to substantially accommodate the motion of the seat cushion (21).

2. The seat belt system for a vehicle as defined in claim 1,
wherein the recess (30) is provided for at least partly storing a spare tire (9), and said cross member (50) is to be located so as to cause no interference against the spare tire (9) during loading and unloading work of the spare tire (9) into and from the recess (30).

3. The seat belt system for a vehicle as defined in any one of claim 1 or 2,
wherein a first guide mechanism (34) is provided for guiding the motion of the seat cushion (21) while maintaining a substantially constant distance between said first fixing portion (67) and said second fixing portion (68) during the motion of the seat cushion (21).

4. The seat belt system for a vehicle as defined in any one of claims 1 to 3,
wherein a depression (21c) is formed on an upper portion of the seat cushion (21) and/or at the seat back (22) for at least partly storing the buckle (65).

5. The seat belt system for a vehicle as defined in any one of claims 1 to 4,
wherein said cross member (50) is concealed by the seat back (22) from above with the folded position of the seat back (22).

6. A vehicle equipped with the seat belt system as defined in any one of the preceding claims.

7. The vehicle as defined in claim 6, comprising,
a box-like sub trunk (40) removably provided behind the seat (20),
wherein the seat (20) and the sub trunk (40) are adapted so that a back surface of the seat back (22) and an upper surface of the sub trunk (40) substantially align with each other, and the recess (30) is at least partly covered with the seat back (22) from above at its front portion and at least partly covered with the sub trunk (40) from above at its rear portion, with the folded position.

8. The vehicle as defined in claim 7,
wherein the sub trunk (40) comprises a central section (41) at the laterally central position and a pair of side sections (42) on the right and left sides of the central section (41), respectively, with the side sections (42) being permanently attached to the floor (F) behind the seat (20), and the central section (41) being removably attached to the floor (F) behind the seat (20).

9. The vehicle as defined in claim 8,
wherein an engagement structure (43k, 44k) is provided between the central section (41) and the side sections (42) so as to allow the central section (41) to releasably engage with the side sections (42).

10. The vehicle as defined in any one of the preceding claims,
wherein the floor (F) includes a lower-situated front floor (F1), a higher-situated rear floor (F2) continuing to the front floor (F1), and a step (Fs) raising the rear floor (F2) at the rear edge of the front floor (F1) by a predetermined height,
the seat (20) is mounted on the rear floor (F2),
the seat cushion (21) comprises a seat cushion frame (24) bending down towards its front edge and a cushion material (25) covering at least over the cushion frame (24), and
a second guide mechanism (34) preferably is provided which downwardly displaces the seat cushion (21) during the fold down operation of the seat back (22) and guides the seat cushion (21) so that the front edge of the seat cushion frame (24) is located ahead of the step (Fs) with the seat back (22) in the folded position.

## Patentansprüche

1. Sitzgurtsystem für ein Fahrzeug, wobei das Fahrzeug einen Sitz (20), welcher an einem Boden (F) des Fahrzeugs angeordnet ist, und eine Vertiefung bzw. Aussparung (30) beinhaltet, welche im wesentlichen nach unten in dem Boden (F) unmittelbar hinter und/oder wenigstens teilweise unter dem Sitz (20) ausgebildet ist, umfassend
ein Kreuz- bzw. Querglied (50), welches an einem Fahrzeugkörper bzw. einer Fahrzeugkarosserie an seinen gegenüberliegenden Endabschnitten festzulegen ist, um sich im wesentlichen über wenigstens einen Teil der Fahrzeugbreite oberhalb der Vertiefung (30) zu erstrecken, und
ein Verschluß- bzw. Schnallenverbindungsglied (66) zum Verbinden einer Schnalle bzw. eines Verschlusses (65) eines Sitzgurts für den Sitz (20) mit dem Querglied (50),
wobei der Sitz (20) wahlweise in eine aufrechte Position, wo eine Sitzrückseite bzw. Sitzlehne (22) des Sitzes (20) im wesentlichen aufrecht nahe dem rückwärtigen Rand bzw. der rückwärtigen Kante eines Sitzpolsters (21) des Sitzes (20) ist, oder in eine gefaltete Position angeordnet ist, wo die Sitzlehne (22) des Sitzes (20) nach vorne, nach unten im wesentlichen auf den Sitzpolster (21) des Sitzes (20) gefaltet ist,
wobei der Sitzpolster (21) auf dem Fahrzeugboden bewegbar in wenigstens einer der Fahrzeuglängsrichtung und vertikalen Richtung, nachfolgend auf den wahlweisen Anordnungsvorgang der Sitzlehne (22) montiert bzw. angeordnet ist,
wobei das Schnallenverbindungsglied (66) an dem Querglied (50) an einem ersten festlegenden bzw. Befestigungsabschnitt (67) festzulegen ist,
**dadurch gekennzeichnet, daß**
das Schnallenverbindungsglied (66) an dem Sitzpolster (21) an einem zweiten festlegenden Abschnitt (68) zwischen dem ersten festlegenden Abschnitt (67) und der Schnalle (65) festzulegen ist, und
die Länge zwischen dem ersten festlegenden Abschnitt (67) und dem zweiten festlegenden Abschnitt (68) so bestimmt ist, um dem Schnallenverbindungsglied (66) zu erlauben, im wesentlichen die Bewegung des Sitzpolsters (21) aufzunehmen.

2. Sitzgurtsystem für ein Fahrzeug nach Anspruch 1,
wobei die Vertiefung (30) für ein wenigstens teilweises Speichern bzw. Aufnehmen eines Ersatzreifens (9) vorgesehen bzw. zur Verfügung gestellt ist, und das Querglied (50) so anzuordnen ist, um keine Beeinflussung gegenüber dem Ersatzreifen (9) während einer Lade- und Entladearbeit des Ersatzreifens (9) in die und aus der Vertiefung (30) zu bewirken.

3. Sitzgurtsystem für ein Fahrzeug nach einem der Ansprüche 1 oder 2,
wobei ein erster Führungsmechanismus (34) für ein Führen der Bewegung des Sitzpolsters (21) vorgesehen ist, während ein im wesentlichen konstanter Abstand zwischen dem ersten festlegenden Abschnitt (67) und dem zweiten festlegenden Abschnitt (68) während der Bewegung des Sitzpolsters (21) beibehalten bzw. aufrechterhalten ist.

4. Sitzgurtsystem für ein Fahrzeug nach einem der Ansprüche 1 bis 3,
wobei eine Vertiefung (21c) an einem oberen Abschnitt des Sitzpolsters (21) und/oder an der Sitzlehne (22) für ein wenigstens teilweises Aufnehmen der Schnalle (65) ausgebildet ist.

5. Sitzgurtsystem für ein Fahrzeug nach einem der Ansprüche 1 bis 4,
wobei das Querglied (50) durch die Sitzlehne (22) von oben bei der gefalteten Position der Sitzlehne (22) verborgen bzw. abgedeckt ist.

6. Fahrzeug, welches mit dem Sitzgurtsystem ausgerüstet ist, wie es in einem der vorangehenden Ansprüche definiert ist.

7. Fahrzeug nach Anspruch 6, umfassend
einen kastenartigen Unter- bzw. Sub-Kofferraum (40), welcher bewegbar hinter dem Sitz (20) vorgesehen ist,
wobei der Sitz (20) und der Süb-Kofferraum (40) adaptiert sind, so daß eine rückwärtige Oberfläche der Sitzlehne (22) und eine obere Oberfläche des Sub-Kofferraums (40) im wesentlichen miteinander ausgerichtet sind, und die Vertiefung (30) wenigstens teilweise mit der Sitzrücklehne (22) von oben an ihrem vorderen Abschnitt abgedeckt ist und wenigstens teilweise mit dem Sub-Kofferraum (40) von oben an ihrem rückwärtigen Abschnitt mit der gefalteten Position abgedeckt ist.

8. Fahrzeug nach Anspruch 7,
wobei der Sub-Kofferraum (40) einen zentralen Abschnitt bzw. Querschnitt (41) an der seitlich zentralen Position und ein Paar von Seitenabschnitten (42) jeweils an der rechten und linken Seite des zentralen Abschnitts (41) aufweist, wobei die Seitenabschnitte (42) permanent an dem Boden (F) hinter dem Sitz (20) festgelegt sind und der zentrale Abschnitt (41) bewegbar an dem Boden (F) hinter dem Sitz (20) festgelegt ist.

9. Fahrzeug nach Anspruch 8,
wobei eine Eingriffsstruktur (43k, 44k) zwischen dem zentralen Abschnitt (41) und den Seitenabschnitten (42) vorgesehen ist, um dem zentralen Abschnitt (41) zu erlauben, lösbar mit den Seitenabschnitten (42) in Eingriff zu gelangen.

10. Fahrzeug nach einem der vorangehenden Ansprüche,
wobei der Boden (F) einen tiefer liegenden vorderen Boden (F1), einen höher liegenden rückwärtigen Boden (F2), welcher an den vorderen Boden (F1) anschließt, und eine Stufe (Fs) beinhaltet, welche den rückwärtigen Boden (F2) an dem rückwärtigen Rand bzw. der rückwärtigen Kante des vorderen Bodens (F1) um eine vorbestimmte Höhe anhebt,
der Sitz (20) an dem rückwärtigen Boden (F2) montiert bzw. angeordnet ist,
der Sitzpolster (21) einen Sitzpolsterrahmen (24), welcher sich nach unten zu seinem vorderen Rand biegt, und ein Polstermaterial (25) umfaßt, welches wenigstens über den Polsterrahmen (24) abdeckt, und
ein zweiter Führungsmechanismus (34) vorzugsweise vorgesehen ist, welcher den Sitzpolster (21) während des Faltvorgangs der Sitzlehne (22) nach unten verschiebt bzw. verlagert und den Sitzpolster (21) führt, so daß der vordere Rand des Sitzpolsterrahmens (24) vor der Stufe (Fs) mit der Sitzrücklehne (22) in der gefalteten Position angeordnet ist.

## Revendications

1. Système de ceinture de sécurité de véhicule, le véhicule comprenant un siège (20) disposé sur le plancher (F) du véhicule et un creux (30) ménagé essentiellement vers le bas dans le plancher (F) immédiatement derrière et/ou au moins partiellement en dessous du siège (20), le système comprenant:
un élément transversal (50) qui doit être fixé sur les parties d'extrémité opposées du corps du véhicule de manière à s'étendre essentiellement au-dessus du creux (30) sur au moins une partie de la largeur du véhicule et
un élément (66) de liaison de boucle qui relie la boucle (65) de la ceinture de sécurité du siège (20) audit élément transversal (50),
le siège (20) étant agencé sélectivement dans la position verticale dans laquelle le dossier (22) du siège (20) est dans la position essentiellement verticale près du bord arrière de la banquette (21) du siège (20) ou dans la position rabattue dans laquelle le dossier (22) du siège (20) est rabattu vers l'avant, essentiellement sur la banquette (21) du siège (20),
la banquette (21) étant montée à déplacement sur le plancher du véhicule dans au moins l'une parmi la direction longitudinale et la direction verticale du véhicule après l'opération d'agencement sélectif du dossier (22),
ledit élément (66) de liaison de boucle devant être fixé sur ledit élément transversal (50) dans une première partie de fixation (67),
**caractérisé en ce que**
ledit élément (66) de liaison de boucle doit être fixé sur la banquette (21) dans une deuxième partie de fixation (68) située entre ladite première partie de fixation (67) et la boude (65) et **en ce que**
la distance entre ladite première partie de fixation (67) et ladite deuxième partie de fixation (68) est prédéterminée de manière à permettre audit élément (66) de liaison de boucle de permettre essentiellement le déplacement de la banquette (21).

2. Système de ceinture de sécurité de véhicule selon la revendication 1, dans lequel le creux (30) est prévu pour ranger au moins en partie un pneu de secours (9), ledit élément transversal (50) devant être situé de manière à n'interférer en rien avec le pneu de secours (9) pendant le placement ou l'enlèvement du pneu de secours (9) dans le creux (30) et hors de ce dernier.

3. Système de ceinture de sécurité de véhicule selon l'une quelconque des revendications 1 ou 2, dans lequel un premier mécanisme de guidage (34) est prévu pour guider le déplacement de la banquette (21) tout en maintenant une distance essentiellement constante entre ladite première partie de fixation (67) et ladite deuxième partie de fixation (68) pendant le déplacement de la banquette (21).

4. Système de ceinture de sécurité de véhicule selon l'une quelconque des revendications 1 à 3, dans lequel un creux (21 c) est ménagé dans la partie supérieure de la banquette (21) et/ou dans le dossier (22) pour reprendre la boucle (65) au moins en partie.

5. Système de ceinture de sécurité de véhicule selon l'une quelconque des revendications 1 à 4, dans lequel ledit élément transversal (50) est recouvert par le haut par le dossier (22) lorsque le dossier (22) est en position rabattue.

6. Véhicule doté du système de ceinture de sécurité selon l'une quelconque des revendications précédentes.

7. Véhicule selon la revendication 6, qui comprend derrière le siège (20) un coffre inférieur (40) amovible du type en boîte, le siège (20) et le coffre inférieur (40) étant adaptés de telle sorte que dans la position rabattue, la surface arrière du dossier (22) et la surface supérieure du coffre inférieur (40) soient essentiellement alignées l'une sur l'autre et que la partie avant du creux (30) soit au moins en partie recouvert par le haut par le dossier (22) et que la partie arrière soit au moins en partie recouverte par le haut par le coffre inférieur (40).

8. Véhicule selon la revendication 7, dans lequel le coffre inférieur (40) comprend une partie centrale (41) située au milieu dans son extension latérale et deux parties latérales (42) situées respectivement à droite et à gauche de la partie centrale (41), les parties latérales (42) étant fixées en permanence sur le plancher (F) derrière le siège (20), la partie centrale (41) étant fixée de manière amovible sur le plancher (F) derrière le siège (20).

9. Véhicule selon la revendication 8, dans lequel une structure d'engagement (43k, 44k) est prévue entre la partie centrale (41) et les parties latérales (42) de manière à permettre à la partie centrale (41) d'engager de manière libérable les parties latérales (42).

10. Véhicule selon l'une quelconque des revendications précédentes,
dans lequel le plancher (F) comprend un plancher avant (F1) situé plus bas, un plancher arrière (F2) qui est situé plus haut et qui prolonge le plancher frontal (F1) et une marche (Fs) qui relève d'une hauteur prédéterminée le plancher arrière (F2) sur le bord arrière du plancher avant (F1),
le siège (20) étant monté sur le plancher arrière (F2),
la banquette (21) comprenant un cadre (24) de banquette courbé vers le bas vers son bord frontal, un matériau (25) de banquette recouvrant au moins le cadre (24) de la banquette,
un deuxième mécanisme de guidage (34) étant de préférence prévu, le, deuxième mécanisme de guidage déplaçant la banquette (21) vers le bas pendant l'opération de rabattement du dossier (22) et guidant la banquette (21) de telle sorte que le bord avant du cadre (24) de la banquette soit situé en avant de la marche (Fs) lorsque te dossier (22) est en position rabattue.
